# EUROPEAN PATENT APPLICATION

(11) **EP 2 711 385 A1**
(43) Date of publication of application: **26.03.2014**
(21) Application number: 12176066.4
(22) Date of filing: 12.07.2012
(51) Int. Cl.: C08G 64/00

(54) **Process for preparing poly(ether carbonate)**

(30) Priority: 12.03.2012 TR 201202779
(71) Applicant: Petkim Petrokimya Holding Anonim Sirekti, 35801 Izmir (TR)
(72) Inventor: Guner, Fusun, 35801 Izmir (TR); Uygun, Ekrem, 35801 Izmir (TR); Erbay, Erol, 35801 Izmir (TR); Uyanik, Nurseli, Istanbul (TR); Sasmaz, Dursun Ali, Istanbul (TR)
(74) Representative: Dericioglu Kurt, Ekin

(57) **Abstract**

The present invention relates to polyethylene carbonate production method performed by the alternating copolymerization reaction of ethylene oxide and carbon dioxide. The objective of this invention is to provide a polyethylene carbonate production method wherein the copolymerization reaction yield is increased, the amount of by products possible to emerge in copolymerization reaction is significantly decreased, by using zinc glutarate/MAO and zinc itaconate/MAO catalyst systems.

## Description

### Field of the Invention

The present invention relates to polyethylene carbonate production method performed by the alternating copolymerization reaction of ethylene oxide and carbon dioxide.

### Background of the Invention

Carbon dioxide (CO₂) is defined as an environmental pollutant which creates greenhouse effect in the atmosphere. It is one of the factors that cause the earth to overheat and it is predicted to have an effect of 66 % on global warming. Therefore, reducing the amount of carbon dioxide in the atmosphere attracts the attention of scientists. It is very important to inactivate spent carbon dioxide in order to reduce the greenhouse effect of carbon dioxide in the atmosphere significantly. For this purpose, it is an economically and ecologically important advantage that carbon dioxide can be used as monomer in a polymerization reaction. As a typical example, during the production of aliphatic polycarbonates, copolymerization reaction of carbon dioxide with epoxides such as ethylene oxide (EO), propylene oxide (PO), butylene oxide (BO), cycloheptane oxide (CHO) is used.

In 1960s, Inoue et al. performed the first known studies in literature in aliphatic polycarbonate production by using diethyl zinc/water mixture as catalyst during alternating copolymerization of propylene oxide and carbon dioxide. Since this study, a wide variety of catalysts have been synthesized in order to increase the catalytic yield and to improve copolymerization conditions. While synthesized catalysts are effective in the alternating copolymerization of epoxides such as cyclohexane and cycloheptane oxide with carbon dioxide, they cannot show the expected yield in the reactions wherein widely used epoxides such as ethylene oxide and propylene oxide. With the homogenous and heterogeneous catalysts synthesized so far, polyalkylene carbonates can be produced but the activity and yield of catalysts remain low. Moreover, the times of reactions are very long.

The most important bottleneck in polyalkylene carbonate is the catalyst. When an effective catalyst is not used in the reaction, the reaction proceeds towards cyclic carbonates and/or homopolymerization formation. Neither a scientifically nor a commercially efficient catalyst has been produced yet. Therefore, catalyst synthesis is a difficult and important issue in carbon dioxide - epoxide alternating copolymerization.

While heterogeneous systems are preferred industrially, intense scientific studies are still being carried on homogeneous catalysts as they provide possibility to analyze the copolymerization mechanism of soluble structures at their own place. It is believed that definition of solubility behaviors of homogeneous catalysts will help improve the catalyst designs. Depending on the catalyst system, reaction conditions, reaction mechanism and product features and thus the field of use of polyalkylene carbonate varies a lot. As carbon dioxide has a high thermodynamic stability, the used catalysts must be very reactive. Zinc, chrome, aluminum, cobalt, manganese, iron compounds are high activity catalytic systems in CO₂-epoxide copolymerization.

In copolymerization reactions, in cases when metals such as A1 and Cr are used as catalyst, co-catalysts must be used with these catalysts in order to provide a good performance. Metals such as Sc, Y, Zn, Cd, Mn, Dy and Lu are active metals in copolymerization reactions. During the use of metals such as La, Nd, Eu, Gd, Ho, Yb, Et in copolymerization reactions as catalyst, the combination of these metals with other metals in order to activate these metals is required.

Epoxide/CO₂ has been known since 1969 when Inoue et al. used diethyl zinc/water mixture in propylene oxide and carbon dioxide copolymerization as catalyst and synthesized a very small amount of polypropylene carbonate. Later studies in this field could not reach their goals due to the formation of unwanted by-products such as cyclic carbonates and/or high level ether bonds in polymer chain and low catalytic activities. Furthermore, while polymer formation is observed in CHO/CO₂ reaction, in some reactions with PO/CO₂ monomers only cyclic carbonate is formed or no transformation is observed.

After the first studies of Inoue et al., in 1976-1977, Kuran et al. developed new catalyst systems including trihydric phenols. In PO/CO₂ copolymerizations, monoprotic molecules and cyclic carbonates are obtained while polypropylene carbonate is synthesized with di and triprotic molecules. In order to overcome the low activity problem, Soga et al. synthesized the first heterogeneous catalyst from the Zn(OH)₂/glutaric acid mixture for PO/CO₂ copolymerization.

The first homogeneous catalyst was developed by Inoue et al. in 1986. This is a single metal centered catalyst including a tetraphenilporphyrine (tpp) ligand with aluminum metal.

In 1995, Darensbourg et al. synthesized catalysts including zinc phenoxide derivatives. These catalysts showed moderate activity during the formation of copolymer which includes about 10% polyether even at 55 bar CO₂ pressure, in PO/CO₂ copolymerization.

The first catalyst design which is more systematic according to the studies in literature was made by Coates et al. β-diiminate catalysts were used in CHO/CO₂ copolymerization. Significant increases were observed in catalytic activity due to small changes in β-diiminate ligand, steric character and electronic character. Until today, Salen type catalyst systems have been the most interesting catalysts in CO₂/epoxide copolymerization. Steric and electronic characters of β-diiminate ligand significantly affect the catalyst activities.

Ethylene oxide is widely used in epoxide-carbon dioxide alternating copolymerizations. The first ethylene oxide/carbon dioxide alternating copolymerization was performed by Inoue et al. In copolymerization, diethyl zinc and water are used as catalyst in the ratio of 1:1 mol. It was observed that the reaction yield was in the range of 1.9-38.5 g polymer/g catalyst. As the result of the reaction, ethylene glycol and ethylene carbonate were formed as by-product. Moreover, the resulting polyethylene carbonate has low molecular weight (Mw 50,000-55,000 g/mol).

In 1997, Murat ACEMOGLU et al. used the same catalyst system by treating with CO₂ for 12 hours before the reaction and they found the yield of polyethylene carbonate between 19-66%.

Again, Murat ACEMOGLU et al. used diethyl zinc/ethylene glycol catalyst system in ethylene oxide-carbon dioxide copolymerization. Copolymerization was performed in dioxane and THF medium. The yield was found between 12-52 %. Ethylene carbonate was formed as by-product. The molecular weight of the synthesized polyethylene was found in the range of Mw 65,700-328,000.

In 2000, Ki-Soo Kim et al used zinc glutarate with a chain terminator as catalyst, in ethylene oxide-carbon dioxide copolymerization. The reaction was performed in dichloromethane medium. The yield is 31-51 g polymer/g catalyst. The molecular weight of the synthesized polyethylene was in the range of Mw 700-2100 g/mol.

In ethylene oxide-carbon dioxide copolymerizations which are made with zinc dicarboxylate catalysts, polyethylene carbonate yield is very low and the resulting copolymers have low molecular weight.
Generally, copolymerization reactions were performed in a solvent medium.

The United States patent document no. US2011087001, an application in the state of the art, discloses methods of synthesizing polyethylene carbonate polymer from the reaction of ethylene oxide (EO) and carbon dioxide (CO₂) in the presence of a metal complex. The said invention also discloses novel metal complexes. The metal complexes used as catalyst in the reaction are zinc, cobalt, aluminum, titanium ruthenium and manganese complexes. Also, N-methylimidazole (N-MeIm) dimethylaminoprydine (DMAP), 1,4-diazabicyclo[2.2.2]octane (DABCO), triethyl amine and diisopropil ethyl amine; an ammonium salt (bis(triphenylphosphoranylidine) ammonium chloride (such as [PPN]C1), a phosphor salt or an arsonium salt was used as co-catalyst fort he reaction.

The North Korea patent document no. KR20000008381**,** an application in the state of the art, discloses polycarbonate ester and the production method thereof. Due to its (bio)degradability, this product is manufactured by the reaction of aliphatic cyclic ester or aliphatic cyclic diester and alkyl oxide, in the case that carbon dioxide having the environmental affinity is provided to the reaction medium. Zinc glutarate is used in the reaction as catalyst.

The Chinese patent document no. CN101003619**,** an application in the state of the art, discloses a method and apparatus for preparing aliphatic polycarbonate. Aliphatic polycarbonate is produced as the result of reaction of carbon dioxide and epoxide as catalyst in the presence of glutarate.

Moreover, United States patent documents no. US 3,585,168; US 4,960,869; US 4,981,948; US 5,041,469; US 5,026,676; US 6,100,372; US 6,262,127; US 6,720,434; US 6,743,570; US 6,815,529; US 6,844,287; US 7, 743, 570 can be shown as referring the inventions in the art.

### Summary of the Invention

The objective of this invention is to provide a alternating polyethylene carbonate production method wherein the molecular weight is high, polyethylene carbonate selectivity is high, cyclic carbonate formation is reduced, by using zinc glutarate/MAO and zinc itaconate/MAO catalyst systems.

Another objective of this invention is to provide a polyethylene carbonate production method which enables to increase the yield, reduce the reaction time and increase the degradation temperature of the resulting final product, by using zinc glutarate/MAO and zinc itaconate/MAO catalyst systems.

### Detailed Description of the Invention

The inventive polyethylene carbonate production is based on carbon dioxide (CO₂) and ethylene oxide (EO) giving alternating copolymerization reaction in the presence of zinc glutarate/methylaluminoxane (ZnGA/MAO) or zinc itaconate/methylaluminoxane (ZnI/MAO) catalyst systems.

In the preferred embodiment of the invention, the reaction is performed in monomer medium for the purpose of increasing the yield and in order to eliminate solvent removal.

In the preferred embodiment of the invention, the reactor is held under vacuum at 50-100 °C for 8-16 hours in order to dry the reactor and to remove volatiles.

In the preferred embodiment of the invention, methylaluminoxane (MAO) which is used in the catalyst system as co-catalyst enables to increase the yield of the reaction, decrease the reaction time and increase the degradation temperature of the resulting final product.

The yield is increased from 70 g polimer/g catalyst to 2700 g polymer/catalyst by the use of ZnGA catalyst with co-catalyst MAO. In the case that the reaction conditions are: 1.5g methylaluminoxane, 900 ml EO, 40-100 atm pressure and CO₂ at 40 °C, the reaction time is reduced from 48 hours to 40 hours. With ZnGA, the maximum degradation temperature of polyethylene carbonate synthesized by the used of co-catalyst MAO is increased from 208 °C to 250 °C'; with ZnI catalyst, the maximum degradation temperature of polyethylene carbonate synthesized by the use of MAO is increased from 198 °C to 223 °C. Transmittances of oxygen and water vapor are 25 cc.mil/m².day.atm, 40 cc.mil/m².day.atm(MAO/ZnGA) relatively.

The yield is increased from 45 g polymer/g catalyst to 250 g polymer/catalyst by the use of ZnI catalyst with co-catalyst MAO. In the case that the reaction conditions are: 1.5g methylaluminoxane, 900 ml EO, 40-100 atm pressure and CO₂ at 40 °C, the reaction time is reduced from 48 hours to 18 hours. With ZnI-MAO catalyst system, permeability of oxygen and water vapor are 47 cc.mil/m².day.atm, 85 cc.mil/m².day.atm (MAO/ZnI) relatively. It was found that the gas permeability of films prepared from copolymers synthesized by the use of MAO is lower. By ZnGA-MAO catalyst system, Mw (average molecular weight) of polyethylene synthesized under the same conditions is increased from 80,500 g/mol to 174,000 g/mol; Mw (average molecular weight) of polyethylene carbonate synthesized with ZnI-MAO catalyst system is increased from 45,000 g/mol to 77,000 g/mol. The densities of copolymers synthesized with both catalyst systems by the density-gradient colon technique at 23 °C are found as 1.51 and 1.38.g/cm³ relatively. Melting flow indexes (MFI) of copolymers at 150 °C/2.16 kg were found as 1.4 g/10 min (MAO/ZnGA) and 1.3 g/10 min (MAO/ZnI). Transparencies of PECs which were synthesized by zinc glutarate/methylaluminoxane and zinc itaconate/methylaluminoxane catalyst systems were measured as % 10 and % 15 relatively.

Ethylene oxide and CO₂ copolymerization reaction performed during the inventive polyethylene carbonate production is carried in an autoclave (Büchi AG, CH-8610 glasuster) that has a volume of 3 liter and mechanical mixer. After the catalyst (1g) is added into the autoclave, the whole system is passivized at a temperature of 100 °C under vacuum for 16 hours. No solvent is used in copolymerization. Before being used in copolymerization, synthesized ZnGA or ZnI catalysts are dried at a temperature of 100 °C for 24 hours. Ethylene oxide (900ml) is fed by liquid mass flow meter. Ethylene oxide getting out of the mass flow meter is fed to the reactor with the lines through which the cooling water at 4 °C passes. MAO solution is given to the system by the metal pressured sample vessel. Autoclave is set to the pressure of 40-100 atm by the carbon dioxide tube. Copolymerization is performed at temperatures of 20 °C, 40 °C, 60 °C, 80 °C, in various MAO/catalyst ratios (0.3, 0.6, 0.9, 1.5), at 850 rpm mixer speed. After 48 hours, the reactor pressure is decreased and the reactor is cooled to room temperature. Copolymer is taken off the reactor and is dried in vacuum oven at room temperature. The product is then weighed. The synthesized product is extracted with ether in order to separate by-products. Selectivity is calculated by dividing the amount of resulting polyethylene carbonate to total product amount. The obtained PEC is dried under vacuum at 50 °C for 24 hours.

In ethylene oxide-carbon dioxide copolymerization, zing glutarate and zinc itaconate were used as catalyst. In order to increase the yield, methylaluminoxane (MAO) was used as co-catalyst with these catalysts. Copolymerization is only performed in monomer medium. Thus, by removing steps of solvent regaining as the result of the reaction, both environmental and cost savings are created.

With zinc glutarate/MAO catalyst system and in copolymerization wherein MAO/catalyst ratio is 1.5, polyethylene carbonate yield is 2.7 kg polymer/g catalyst. Mw, is 174,000g/mol. Reaction time was decreased from 48 hours to 18 hours by the use of cocatalyst. Polyethylene selectivity is 100% and there is no by-product as the result of the reaction (polyethylene oxide resulting from homopolymerization, ethylene carbonate, ethylene glycol). Degradation temperature of copolymer is increased from 208 °C to 250 °C by using co-catalyst. By the use of co-catalyst (MAO), zinc glutarate catalyst and polyethylene carbonate yield increased significantly. The resulting copolymer has high molecular weight.

Zinc itaconate catalyst has never been used in epoxide-carbon dioxide copolymerization so far. The yield is 125 g polymer/g catalyst as the result of copolymerization with this catalyst. The yield obtained by the use of zinc itaconate catalyst and co-catalyst MAO together is 250 g polimer/g. MAO/catalyst ratio is 1.5. Reaction time was decreased from 48 hours to 18 hours by the use of cocatalyst. Mw, is 77,000g/mol. Ethylene carbonate was formed as by-product. Polyethylene carbonate selectivity is 82-92%. Degradation temperature of copolymer is increased from 198 °C to 223 °C by using co-catalyst.

### Experiments

### The effect of co-catalyst amount on polyethylene carbonate synthesis

In order to see co-catalyst effect in polyethylene carbonate synthesis, different ratios of MAO/ZnGA and MAO/ZnI were used at reaction temperature of 40 °C and under 40-100 atm pressure. In some experiments ZnGA and in some others ZnI was used as catalyst. Methylaluminoxane (MAO) was used as cocatalyst. (Table 1, when ZnGA or ZnI co-catalyst is not used (experiment 1, 6)) As co-catalyst, MAO affected PEC selectivity and PEC yield considerably. When ZnGa catalyst is used, MAO/ZnGa ratio is 0.3 and the yield is 1000 g polymer/catalyst. When ZnI catalyst is used, MAO/ZnI ratio is 0.3 and the yield is 125 g polymer/catalyst.

**Table 1 is showing the effect of co-catalyst (MAO) amount on polyethylene carbonate output^{a}.**

| Experiment No | ZnGA (g) | ZnI (g) | MAO/catalyst ratio | Selectivity (%) | Yield (g polymer/g cat.) | Mₙ/M_{w}/PI^{d} |
|---|---|---|---|---|---|---|
| 1^{b} | 1 | 0 | - | 95 | 70 | 35.0k/80.5k/2.3 |
| 2 | 1 | 0 | 0.3 | 99 | 1000 | 54.3k/140.5k/2.8 |
| 3 | 1 | 0 | 0.6 | 100 | 1387 | 57.0k/148.7k/2.6 |
| 4 | 1 | 0 | 0.9 | 100 | 1500 | 65.5k/154.0k/2.4 |
| 5 | 1 | 0 | 1.5 | 100 | 2700 | 65.5k/174.0k/2.7 |
| 6^{c} | 0 | 1 | - | 75 | 45 | 20.0k/45.0k/2.3 |
| 7 | 0 | 1 | 0.3 | 82 | 125 | 20.0k/55.0k/2.3 |
| 8 | 0 | 1 | 0.6 | 86 | 150 | 25.1k/65.3k/2.2 |
| 9 | 0 | 1 | 0.9 | 88 | 180 | 26.0k/76.2k/2.2 |
| 10 | 0 | 1 | 1.5 | 92 | 250 | 25.9k/77.5k/2.3 |

| | | | | | | |
|---|---|---|---|---|---|---|
| a Reaction conditions: EO (900 ml), CO₂ pressure (40-100 atm), temperature (40 °C), reaction time (48h) b ZnGA used ( cocatalyst (MAO) not used) c ZnI used ( cocatalyst (MAO) not used) d Mn (number average molecular weight), Mw (weight average molecular weight), PI (Mw/Mn) | | | | | | |

When MAO/catalyst ratio is increased to 1.5, the yield is 2700 g polymer/g catalyst in ZnGA-MAO catalyst system and 250 g polymer/g catalyst in ZnI-MAO catalyst system. In the same conditions, molecular weight is 174,000 g/mol in ZnGA-MAO catalyst system and 77,500 h/mol in ZnI-MAO catalyst system. High molecular weight polymer is synthesized with both catalyst systems. The increase in MAO amount increased PEC yield, PEC selectivity and molecular weight considerably. In ZnGA-MAO system, PEC selectivity is 99-100% depending on MAO/catalyst ratio. This increase is lower in ZnI-MAO system. Ethylene carbonate was formed as by-product. MAO showed high activity with ZnGA catalyst in CO₂-EO copolymerization. Among studies made with zinc dicarboxylates, the highest yield was obtained with MAO.

### The effect of temperature on PEC synthesis with MAO (zinc dicarboxylate catalysts

As seen in Table 2, temperature affects polyethylene carbonate yield. Temperature is one of the most important factors in EO-CO₂ copolymerization, because as copolymerization temperature increases, the reaction proceeds toward cyclic carbonate formation. The increase in temperature increases PEC yield, selectivity and molecular weight. At 40 °C, with ZnGA-MAO catalyst system, PEC yield is 2700 g polymer/g catalyst; at the same temperature, with ZnI-MAO catalyst system, it is 267 g polymer/g catalyst. When the temperature is above 40 °C, PEC yield decreases due to ethylene carbonate formation. Optimum temperature for ethylene oxide-carbon dioxide copolymerization is 40 °C.

**Table 2 is showing the effect of temperature on copolymerization with co-catalyst to reaction yield^{a}.**

| Experiment No. | ZnG A (g) | ZnI (g) | Temperature (°C) | Selectivity (%) | Yield (g polymer/g cat.) | Mₙ/M_{w}/PI^{b} |
|---|---|---|---|---|---|---|
| 1 | 1 | 0 | 20 | 99 | 2130 | 72.5k/165.5k/2. 3 |
| 2 | 1 | 0 | 40 | 100 | 2700 | 65.0k/174.0k/2. 7 |
| 3 | 1 | 0 | 60 | 98 | 2400 | 65.8k/170.0k/2. 6 |
| 4 | 1 | 0 | 80 | 96 | 2023 | 64.8k/171.0k/2. 6 |
| 5 | 0 | 1 | 20 | 80 | 198 | 28.8k/69.0k/2.4 |
| 6 | 0 | 1 | 40 | 92 | 267 | 34.1k/77.3k/2.3 |
| 7 | 0 | 1 | 60 | 94 | 251 | 35.0k/76.2k/2.2 |
| 8 | 0 | 1 | 80 | 88 | 210 | 32.9k/73.5k/2.2 |

| | | | | | | |
|---|---|---|---|---|---|---|
| a Reaction conditions: methylaluminoxane (1.5 g), EO (900 ml), CO₂ pressure (40-100 atm), reaction time (48h) b Mn (number average molecular weight), Mw (weight average molecular weight), PI (Mw/Mn) | | | | | | |

### The effect of co-catalyst on copolymerization reaction time

In Table 3: with ZnGA-MO and ZnI-MAO catalyst systems, the same copolymerization yields are (2,7 kg polymer/g catalyst, ZnGA-MAO and 250 g polymer/g catalyst ZnI-MAO). While the reaction time decreased from 48 hours to 40 hours with ZnGA-MAO catalyst system, it decreased from 48 hours to 18 hours with ZnI-MAO catalyst system. It was found that metilaluminoxane showed a very important activity in zinc dicarboxylate catalyst systems.

**Table 3 is showing the effect of co-catalyst on copolymerization reaction time.**

| Experiment No. | ZnGA (g) | ZnI (g) | Reaction time (hour) | Selectivity (%) | Yield (g polymer/g cat.) | Mₙ/M_{w}/PI^{d} |
|---|---|---|---|---|---|---|
| 1 | 1 | 0 | 48 | 100 | 2700 | 71.0k/170.3k/2.4 |
| 2 | 1 | 0 | 40 | 100 | 2700 | 71.0k/170.5k/2.4 |
| 3 | 1 | 0 | 30 | 100 | 2396 | 75.0k/172.7k/2.3 |
| 4 | 1 | 0 | 15 | 100 | 2396 | 74.0k/170.0k/2.3 |
| 5 | 0 | 1 | 48 | 92 | 250 | 32.0k/77.4k/2.4 |
| 6 | 0 | 1 | 40 | 93 | 250 | 32.0k/76.9k/2.4 |
| 7 | 0 | 1 | 30 | 93 | 252 | 34.1k/76.8k/2.3 |
| 8 | 0 | 1 | 15 | 92 | 251 | 33.6k/77.3k/2.3 |

| | | | | | | |
|---|---|---|---|---|---|---|
| a Reaction conditions: methylaluminoxane(1.5g), EO (900 ml), CO₂ pressure (40-100 atm), temperature (40 °C) d Mn (number average molecular weight), Mw (weight average molecular weight), PI (Mw/Mn) | | | | | | |

### Product features of polyethylene carbonates synthesized with cocatalyst

Polyethylene carbonate was synthesized with EO-CO₂ copolymerization at 40 °C temperature and under 40-100 atm by zinc dicarboxylate/methylaluminoxane catalyst system. Ethylene oxide was used as both monomer and solvent in reaction medium. It was determined by the NMR technique that the resulting copolymers were alternating. The synthesized copolymer was found to be amorphous thermoplastic with XRD patterns and DSC thermograms. Product features of synthesized polyethylene carbonates are given in Table 4. Copolymer synthesized with ZnGA-MAO catalyst system has a glass transition temperature of 35 °C and copolymer synthesized with ZnI-MAO catalyst system has a glass transition temperature of 29 °C. By MAO usage, glass transition temperature increased 10 °C /ZnGA-MAO) and 4 °C (ZnI-MAO). MAO also showed positive effect on degradation temperature of the synthesized copolymers. With MAO usage, degradation temperature increased 42 °C according to the copolymer synthesized with ZnGA catalyst and 25 °C according to the copolymer synthesized with ZnI. With both catalyst systems, water vapor and oxygen permeability decreased. With these features, it is thought to be used as barrier layer in package sector.

**Table 4 is showing the product features of polyethylene carbonate synthesized with MAO.**

| Experiment No. | ZnGA (g) | ZnI (g) | MFI^{a} (g/10 min.) | Density^{b} (g/cm³) | Tg (°C) | Tmax (°C) | P(H₂O)^{c} | P(O₂)^{d} |
|---|---|---|---|---|---|---|---|---|
| 1^{e} | 1 | 0 | 1.49 | 1.42 | 25 | 208 | 62 | 54 |
| 2 | 1 | 0 | 1.90 | 1.51 | 35 | 250 | 40 | 25 |
| 3^{f} | 0 | 1 | 1.39 | 1.30 | 25 | 198 | 118 | 78 |
| 4 | 0 | 1 | 1.55 | 1.38 | 29 | 223 | 85 | 47 |

| | | | | | | | | |
|---|---|---|---|---|---|---|---|---|
| Reaction conditions: methylauminoxane(1.5g), EO (900 ml), CO₂ pressure (40-100 atm), temperature (40 °C) a MFI, measured as 150 °C/2160 g (g/10 min) b density, measured as 23 °C (g/cm³) c Water vapor permeability, measured as 38 °C and 90% relative humidity (cc.mil/m².day.atm) d O₂ permeability, measured as 23 °C and 0% relative humidity (cc.mil/m².day.atm) e MAO not used, only ZnGA used f MAO not used, only ZnI used | | | | | | | | |

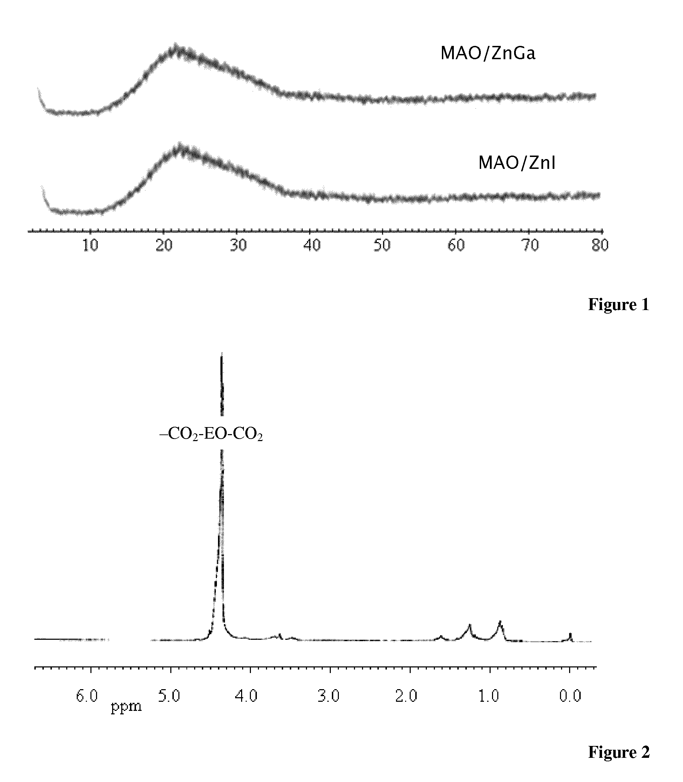

With MAO/Zinc dicarboxylate catalyst system, at 40 °C temperature and 40-100 atm pressure, with EO and CO₂ copolymerization, PEC is synthesized at high yield, high selectivity and high molecular weight. It was diagnosed that PEC, which is synthesized with ethylene oxide DSC and XRD (Figure 1) analysis, was an amorphous thermoplastic copolymer. According to DSC thermograms, glass transition temperature of PEC was found 35 °C when synthesized with MAO/ZnGA catalyst system and 29 °C when synthesized with MAO/ZnI catalyst system. Glass transition temperatures with co-catalyst usage increase 10 °C and 4 °C relatively. Degradation temperatures of synthesized PECs increase 42 °C with MAO/ZnGA catalyst system and 25 °C with MAO/ZnI catalyst system. MAO made a positive effect on the thermal features of synthesized copolymers and improved these features significantly. Copolymers are neither in a typical engineering plastic nor a rubber structure.

It was observed by NMR analysis that the synthesized polyethylene carbonates were alternating copolymers. Peaks observed in HNMR spectrum were (CDCl3), 1.33 ppm, 4.36 ppm(s,CH₂, C=OOCH₂CH₂O). It was detected that alternation in this way was -CO₂-EO-CO₂-. NMR spectrum of polyethylene carbonate synthesized with MAO/ZnGA and MAO/ZnI catalyst system is given in Figure 2.

Within the scope of these basic concepts, it is possible to develop various embodiments of the inventive polyethylene carbonate production method. The invention can not be limited to the examples described herein and it is essentially as defined in the claims.

## Claims

1. A polyethylene carbonate production method which enables to use carbon dioxide as raw material in a reaction in order to decrease the emission of carbon dioxide that creates greenhouse effect in the atmosphere and to synthesize a novel polymer having high added value, **characterized in that** it gives a CO₂-EO-CO₂ alternating copolymerization reaction, wherein the degradation temperature of PEC which is obtained in the presence of zinc glutarate/methylaluminoxane (ZnGA/MAO) catalyst systems of carbon dioxide and ethylene oxide increases from 208 °C to 250 °C; glass transition temperature increases from 25 °C to 35 °C; the reaction time decreases from 48 hours to 40 hours; the yield increases to 2.7 kg polymer/g catalyst; selectivity increases in the range of 96-100%.

2. A polyethylene carbonate production method which enables to use carbon dioxide as raw material in a reaction in order to decrease the emission of carbon dioxide that creates greenhouse effect in the atmosphere and to synthesize a novel polymer having high added value, **characterized in that** it gives a CO₂-EO-CO₂ alternating copolymerization reaction, wherein the degradation temperature of PEC which is obtained in the presence of zinc itaconate/methylaluminoxane (ZnI/MAO) catalyst systems of carbon dioxide and ethylene oxide increases from 198 °C to 223 °C; glass transition temperature increases from 25 °C to 29 °C; the reaction time decreases from 48 hours to 18 hours; the yield increases to 250 g polymer/g catalyst; selectivity increases in the range of 80-94%.

3. A polyethylene carbonate production method according to any of the preceding claims, which enables to use carbon dioxide as raw material in a reaction in order to decrease the emission of carbon dioxide that creates greenhouse effect in the atmosphere and to synthesize a novel polymer having high added value, **characterized by** production of polyethylene carbonate, which is obtained in the presence of zinc glutarate/methylaluminoxane (ZnGA/MAO) catalyst systems of carbon dioxide and ethylene oxide wherein the oxygen permeability is decreased from 54 cc.mil/m².day.atm to 25 cc.mil/m².day.atm, water vapor permeability is decreased from 62 cc.mil/m².day.atm to 40 cc.mil/m².day.atm and transparency value is 10%.

4. A polyethylene carbonate production method according to Claim 1 or 2, which enables to use carbon dioxide as raw material in a reaction in order to decrease the emission of carbon dioxide that creates greenhouse effect in the atmosphere and to synthesize a novel polymer having high added value, **characterized by** production of polyethylene carbonate, which is obtained in the presence of zinc itaconate/methylaluminoxane (ZnI/MAO) catalyst systems of carbon dioxide and ethylene oxide wherein the oxygen permeability is decreased from 78 cc.mil/m².day.atm to 47 cc.mil/m².day.atm, water vapor permeability is decreased from 118 cc.mil/m².day.atm to 85 cc.mil/m².day.atm and transparency value is 15%.

5. A polyethylene carbonate production method according to any of the preceding claims, **characterized by** use of methylaluminoxane (MAO), which is used as co-catalyst in catalyst system and creates the potential of the final product's being used as barrier layer in package production by enabling the decrease of oxygen and water vapor permeability.

6. A polyethylene carbonate production method according to any of the preceding claims, **characterized by** use of methylaluminoxane (MAO), which is used as co-catalyst in catalyst system and enables to increase the reaction yield, shorten the reaction time and to increase the degradation temperature and the glass transition temperature of the resulting final product.

7. A polyethylene carbonate production system according to any of the preceding claims **characterized in that** the reactor is kept at 50-100 °C temperature and under vacuum for 8-16 hours for the purpose of drying the reactor and to remove the volatiles.

8. A polyethylene carbonate production method according to any of the preceding claims, **characterized in that** the reaction is performed in monomer medium for the purpose of increasing the yield and in order to eliminate solvent removal.

## Amended claims

### Amended claims in accordance with Rule 137(2) EPC.

**1.** A polyethylene carbonate (PEC) production method which enables to use carbon dioxide as raw material in a reaction in order to decrease the emission of carbon dioxide that creates greenhouse effect in the atmosphere and to synthesize a novel polymer which is more improved relative to the conventional applications,
and **characterized in that** carbon dioxide and ethylene oxide give alternating copolymerization reaction in the presence of zinc glutarate/methylaluminoxane (ZnGA/MAO) or zinc itaconate/methylaluminoxane (ZnI/MAO) catalyst systems.

**2.** A polyethylene carbonate production method **characterized in that** carbon dioxide and ethylene oxide give alternating copolymerization reaction in the presence of ZnGA/MAO catalyst systems in order to enable the degradation temperature of PEC which is obtained in Claim 1 to increase from 208 °C to 250 °C; glass transition temperature thereof to increase from 25 °C to 35 °C; the reaction time thereof to decrease from 48 hours to 40 hours; the reaction yield thereof to increase from 70 g polymer/g catalyst to 2.7 kg polymer/g catalyst; the average molecular weight thereof to increase from 80,500 g/mol to 174,000 g/mol; selectivity thereof to increase from 96% to 100% and to enable PEC to be in the form of CO₂-EO-CO₂.

**3.** A polyethylene carbonate production method **characterized in that** carbon dioxide and ethylene oxide give alternating copolymerization reaction in the presence of ZnI/MAO catalyst systems in order to enable the degradation temperature of PEC which is obtained in Claim 1 to increase from 198 °C to 223 °C; glass transition temperature thereof to increase from 25 °C to 29 °C; the reaction time thereof to decrease from 48 hours to 18 hours; the reaction yield thereof to increase from 45 g polymer/g catalyst to 250 g polymer/g catalyst; the average molecular weight thereof to increase from 45,000 g/mol to 77,500 g/mol; selectivity thereof to increase from 80% to 94% and to enable PEC to be in the structure of CO₂-EO-CO₂.

**4.** A polyethylene carbonate production method according to Claim 2, **characterized by** reaction of carbon dioxide and ethylene oxide in the presence of ZNGa/MAO catalyst systems for producing polyethylene carbonate whose oxygen permeability (at 160µ film thickness) is decreased from 54 cc.mil/m².day.atm to 25 cc.mil/m².day.atm, water vapor permeability (at 160µ film thickness) is decreased from 62 cc.mil/m².day.atm to 40 cc.mil/m².day.atm and transparency value is 10%.

**5.** A polyethylene carbonate production method according to Claim 3, **characterized by characterized by** reaction of carbon dioxide and ethylene oxide in the presence of zinc itaconate/methylaluminoxane (ZnI/MAO) catalyst system for producing polyethylene carbonate whose oxygen permeability (at 160µ film thickness) is decreased from 78 cc.mil/m².day.atm to 47 cc.mil/m².day.atm, water vapor permeability (at 160µ film thickness) is decreased from 118 cc.mil/m².day.atm to 85 cc.mil/m².day.atm and transparency value is 15%.

**6.** A polyethylene carbonate production method according to any of the preceding claims, **characterized by** use of methylaluminoxane (MAO), which is used as co-catalyst in catalyst system and creates the potential of the final product's being used as barrier layer in multilayer packaging film production by enabling the decrease of oxygen and water vapor permeability.

**7.** A polyethylene carbonate production method according to any of the preceding claims, **characterized by** use of methylaluminoxane (MAO), which is used as co-catalyst in catalyst system and enables to increase the reaction yield, shorten the reaction time and to increase the degradation temperature and the glass transition temperature of the resulting final product.

**8.** A polyethylene carbonate production system according to any of the preceding claims **characterized in that** the reactor is kept at 50-100 °C temperature and under vacuum for 8-16 hours for the purpose of drying the reactor and to remove the volatiles.

**9.** A polyethylene carbonate production method according to any of the preceding claims, **characterized in that** the reaction is performed in monomer medium for the purpose of increasing the yield and in order to eliminate solvent removal.
